# EUROPÄISCHE PATENTANMELDUNG

(11) **EP 3 012 233 A1**
(43) Veröffentlichungstag der Anmeldung: **27.04.2016**
(21) Anmeldenummer: 14190126.4
(22) Anmeldetag: 23.10.2014
(51) Int. Cl.: C02F 3/00, C02F 3/30

(54) **REGELUNGSVORRICHTUNG UND -VERFAHREN FÜR EINE KLÄRANLAGE**

(71) Anmelder: Siemens Aktiengesellschaft, 80333 München (DE)
(72) Erfinder: Labisch, Daniel, Dr., 76189 Karlsruhe (DE); Pfeiffer, Bernd-Markus, Dr., 76744 Wörth (DE); Pirsing, Andreas, Dr., 16766 Sommerfeld (DE)

(57) **Zusammenfassung**

In einer Kläranlage wird in einem Belebungsbecken (1) Abwasser durch intermittierende Belüftung (5) nitrifiziert und denitrifiziert, wobei während der Phase der Nitrifikation die Leistung der Belüftung (5) in Abhängigkeit von einer gemessenen Prozessgröße geregelt wird.

Um die Regelung der Nitrifikation zu verbessern, wird der Ammoniumgehalt des Abwassers als die zu regelnde Prozessgröße verwendet.

Vorzugsweise erfolgt die Regelung (10) modellbasiert prädiktiv und entlang eines vorgegebenen Sollwertverlaufs für den Ammoniumgehalt, wobei der Sollwertverlauf zu einer vorgegebenen Zeit für das Ende der Phase der Nitrifikation einen vorgegebenen Schwellenwert (9) unterschreitet. Weiterhin wird vorzugsweise die Zulaufmenge (19) des Abwassers in das Belebungsbecken (1) der Regelung (10) als Störgröße aufgeschaltet.

## Beschreibung

Die Erfindung betrifft eine Regelungsvorrichtung nach dem Oberbegriff des Anspruchs 1.

Die Erfindung betrifft ferner ein Regelungsverfahren nach dem Oberbegriff des Anspruchs 5.

Bei der biologischen Abwasserreinigung nach dem Belebtschlamm- oder Belebungsverfahren wird das Abwasser durch die Stoffwechselaktivität von aeroben Mikroorganismen, dem sogenannten Belebtschlamm, von organischen Verunreinigungen befreit. Dabei erfolgt der Abbau von Stickstoff durch Nitrifikation und Denitrifikation. Während der Nitrifikation müssen aerobe Bedingungen herrschen, damit eine Oxidation von Ammonium (NH4) in Nitrat (N03) durch autotrophe Mikroorganismen erfolgen kann. Während der nachfolgenden Denitrifikation wird das Nitrat in Stickstoff (N2) umgewandelt. Dazu müssen anoxische Bedingungen vorliegen, damit heterotrophe Mikroorganismen den Nitratsauerstoff zur Atmung nutzen und die Umwandlung in Stickstoff durchführen können.

Um die Nitrifikation und Denitrifikation in nur einem Belebungsbecken durchführen zu können, wird das Becken zeitlich abwechselnd (intermittierend) belüftet und nicht belüftet. Bei Druckluftbelüftung erfolgt die Regelung der Leistung der Belüftung durch Ein- und Ausschalten und Drehzahlregelung von Gebläsen oder Kompressoren, wobei die komprimierte Luft über steuerbare Luftklappen in das Becken eingeleitet wird, wenn mehrere Becken von einem Kompressor versorgt werden.

Bei modernen Automatisierungskonzepten erfolgt die Umschaltung zwischen Nitrifikation und Denitrifikation in Abhängigkeit von dem Ammonium- und Nitratgehalt, der mit Hilfe einer NH4/NO3-Kombisonde gemessen wird. Die Nitrifikationsphase und damit die Belüftung werden beendet, sobald genügend Ammonium abgebaut worden ist, d.h. die Konzentration von Ammonium-Stickstoff (NH4-N) unter einen Schwellenwert von z. B. 0,5 mg/l gesunken ist. Die Denitrifikationsphase wird beendet, sobald genügend Nitrat abgebaut worden ist, d. h. die Konzentration von Nitrat-Stickstoff (NO3-N) unter einen Schwellenwert von z. B. 8 mg/l gesunken ist.

Zur Regelung der Leistung der Belüftung während der Nitrifikationsphase wird die Konzentration des gelösten Sauerstoffs in dem Belebungsbecken gemessen und über einen PID-Regler eine möglichst konstante Sauerstoffkonzentration von z. B. 1 bis 2 mg/l sichergestellt. Der Stelleingriff erfolgt entweder über die Gebläsedrehzahl oder die Stellung von Luftklappen, falls mehrere Becken von einem Gebläse versorgt werden.

Schwankungen des Zulaufs im Hinblick auf die Menge und/oder die Konzentration der Schmutzfracht, die beispielsweise durch Unwetter-Ereignisse oder Verhaltensmuster der angeschlossenen Verbraucher (Haushalte und Industrieunternehmen) hervorgerufen werden, stellen eine große Herausforderung für die Betreiber von Kläranlagen dar, weil die gesetzlichen Grenzwerte für den Ablauf der Kläranlage in ein Fließgewässer unter allen Umständen eingehalten werden müssen. Derzeitige Automatisierungskonzepte können auf veränderte Zulaufbedingungen frühestens dann reagieren, wenn sich die Konzentrationen in dem Belebungsbecken verändert haben. In den meisten Fällen erfolgt jedoch keine automatisierte Reaktion.

Ein weiteres Problem ist die schwierige Einstellung der Sauerstoffregelung bei intermittierendem Betrieb, weil in der Praxis oft die zeitliche Dauer einer Nitrifikationsphase nicht ausreicht, um ein sauberes Einschwingen der Sauerstoffregelung zu ermöglichen.

Der Erfindung liegt die Aufgabe zugrunde, die Regelung der Nitrifikation in einer Kläranlage zu verbessern.

Gemäß der Erfindung wird die Aufgabe durch die in Anspruch 1 angegebene Regelungsvorrichtung bzw. das in Anspruch 5 angegebene Regelungsverfahren gelöst.

Vorteilhafte Weiterbildungen der Erfindung sind den Unteransprüchen zu entnehmen.

Der Erfindung liegt die Erkenntnis zugrunde, dass in der Nitrifikationsphase die Sauerstoffkonzentration nur eine Hilfsregelgröße zur Bereitstellung passender Umgebungsbedingungen für den aeroben Stoffwechsel der Mikroorganismen darstellt. Eine über längere Zeit konstante Sauerstoffkonzentration ist nicht leicht erreichbar und aus Sicht der Verfahrenstechnik und Biologie auch nicht erforderlich.

Entsprechend der Erfindung wird die Regelung der Leistung der Belüftung in der Nitrifikationsphase, also die Regelung der Gebläsedrehzahl oder der Stellung von Luftklappen, direkt an der primär interessierenden Prozessgröße ausgerichtet, d. h. an der Ammoniumkonzentration. Da für die Erfassung der Umschaltbedingungen beim intermittierenden Betrieb der Einsatz einer geeigneten Sonde, z. B. NH4/NO3-Kombisonde, ohnehin vorgesehen ist, steht der Ammonium-Messwert bereits zur Verfügung.

Während also bei der herkömmlichen Regelung der Belüftung so viel Luft eingeblasen wird, wie zum Erreichen des Sauerstoff-Sollwerts erforderlich ist, und zwar unabhängig davon ob zum Abbau der Schmutzfracht überhaupt so viel Sauerstoff benötigt wird, wird durch die Umstellung des Regelungskonzepts auf Ammonium als Hauptregelgröße nur noch so viel Luft eingeblasen, wie tatsächlich erforderlich ist, um den Mikroorganismen genügend Sauerstoff für den gewünschten Abbau des Ammoniums bereitzustellen. Da der Energieverbrauch von Gebläsen mit der dritten Potenz der Drehzahl ansteigt, kann aufgrund der Erfindung deutlich Energie gespart werden.

Die Regelung wird vorzugsweise als modellprädiktive Regelung realisiert, was folgende Vorteile oder Weiterbildungsmöglichkeiten für die Erfindung bietet:
- leichte Anpassung an schwierige Streckendynamik mit großen Verzugs- oder gar Totzeiten durch automatische Identifikation eines Prozessmodells aus Lerndaten und Nutzung des vorhergesagten Prozessverhaltens im laufenden Betrieb,
- aufwandsarme Realisierung von Sollwerttrajektorien als situationsangepasste Zeitverläufe mit Hilfe eines integrierten Führungsgrößenfilters und
- aufwandsarme, vollständig tool-gestützte Realisierung einer modellbasierten dynamischen Störgrößenaufschaltung.

So erfolgt die Regelung vorzugsweise entlang eines vorgegebenen Sollwertverlaufs für den Ammoniumgehalt des Abwassers, wobei der Sollwertverlauf zu einer vorgegebenen Zeit für das Ende der Phase der Nitrifikation einen vorgegebenen Schwellenwert unterschreitet. Die Ammoniumkonzentration soll also in einer vorgegebenen Zeit von einem gemessenen Startwert zu Beginn der Nitrifikationsphase auf einen vorgegeben Zielwert sinken. Solange dies gelingt, ist die eingeblasene Luftmenge ausreichend.

Der gewünschte zeitliche Verlauf des Abfalls der Ammoniumkonzentration kann über ein Führungsgrößenfilter vorgegeben werden, das vorteilhafterweise in dem modellbasierten prädiktiven Regler integriert ist. Intern arbeitet der Regler mit zukünftigen Sollwertverläufen, die mit den vorhergesagten Bewegungen der Regelgrößen verglichen werden. Ohne den Führungsgrößenfilter wird angenommen, dass der aktuelle Sollwert auch in Zukunft innerhalb des Prädiktionshorizonts unverändert gültig ist. Bei einem Sollwertsprung bedeutet dies, dass der neue Sollwert auch in der näheren Zukunft bereits in voller Höhe gefordert wird, obwohl der Prozess dies gar nicht schaffen kann. Mit dem Führungsgrößen- oder Sollwertfilter wird eine asymptotische Sollwert-Trajektorie vom aktuellen Istwert zum geforderten Sollwert berechnet, sodass der geforderte Sollwert in der angegebenen Zeit erreicht wird. Dabei wird der Ziel-Sollwert knapp unter den Schwellenwert für die Umschaltung zur Beendigung der Nitrifikationsphase gelegt, so dass sichergestellt ist, dass der Schwellenwert sicher unterschritten wird und die Umschaltung auf Denitrifikation erfolgt. Insbesondere zu Beginn der Nitrifikation kann deutlich Energie gespart werden, indem das Gebläse entsprechend der Trajektorie sanft hochgefahren wird.

Weiterhin wird vorzugsweise eine Störgrößenaufschaltung der Zulaufmenge in das Belebungsbecken realisiert, um vorausschauend auf Schwankungen reagieren zu können. Die Störgrößenaufschaltung lässt sich ohne zusätzliche Bausteine direkt mit dem modellbasierten prädiktiven Regler realisieren, indem die Einflüsse aufgrund der Zulaufschwankungen zur Korrektur der vorhergesagten Zeitverläufe herangezogen werden.

Zur weiteren Erläuterung der Erfindung wird im Folgenden auf die Figuren der Zeichnung Bezug genommen; im Einzelnen zeigen die
Figur 1 ein Beispiel für eine Kläranlage mit einer Regelungsvorrichtung zur Belüftungsregelung,
Figur 2 ein Beispiel für die erfindungsgemäße Regelungsvorrichtung,
Figur 3 Ergebnisse einer Simulation des erfindungsgemäßen Regelungsverfahrens und
Figur 4 zum Vergleich die Ergebnisse bei bekannter Regelung.

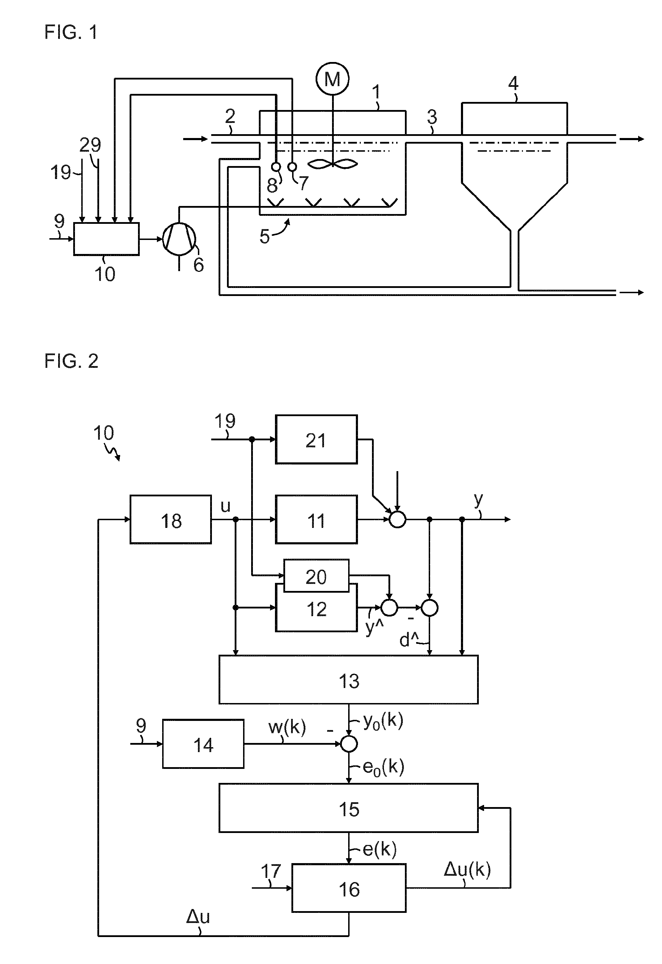

Figur 1 zeigt in sehr vereinfachter schematischer Darstellung eine Kläranlage mit einem Belebungsbecken 1, das über einen Zulauf 2 von einem Sandfang kommendes und zu reinigendes Abwasser erhält. In dem Belebungsbecken 1 wird das Abwasser durch intermittierende Nitrifikation und Denitrifikation biologisch gereinigt. Das Schlamm-Wasser-Gemisch gelangt über einen Ablauf 3 in ein Nachklärbecken 4, wo der Belebtschlamm von dem gereinigten Abwasser getrennt und als Rücklaufschlamm in das Belebungsbecken 1 zurückgefördert wird.

Während der Nitrifikationsphasen wird das in dem Belebungsbecken 1 enthaltene Gemisch aus Abwasser und Belebtschlamm über eine Belüftungseinrichtung 5 druckbelüftet. Die Belüftungseinrichtung 5 kann je nach Anforderung ein oder mehrere Gebläse 6 oder Kompressoren aufweisen, die ein- und ausschaltbar und, zumindest im Falle der Gebläse, bezüglich ihrer Drehzahl regelbar sind. Erfolgt die Luftzufuhr in das Belebungsbecken 1 über Luftklappen, so sind auch diese regelbar.

In dem Belebungsbecken 1 werden der Ammonium- und Nitratgehalt des Schlamm-Wasser-Gemischs mit Hilfe einer geeigneten Sonde 7, z. B. einer NH4/NO3-Kombisonde, gemessen. Mittels weiterer Sonden 8 können weitere Parameter, wie der gelöste Sauerstoffgehalt, das Redoxpotential oder der pH-Wert gemessen werden. Die Nitrifikationsphase und damit die Belüftung werden beendet, sobald die Konzentration von Ammonium-Stickstoff unter einen Schwellenwert 9 von z. B. 0,5 mg/l gesunken ist. Während der Nitrifikation wird, wie unten stehend noch näher erläutert wird, mittels eines Reglers 10 die Gebläsedrehzahl bzw. die Luftklappenstellung in Abhängigkeit von der gemessenen Konzentration von Ammonium-Stickstoff geregelt. Die auf die Nitrifikationsphase folgende Denitrifikationsphase wird beendet, sobald die Konzentration von Nitrat-Stickstoff unter einen Schwellenwert von z. B. 8 mg/l abgesunken ist.

Figur 2 zeigt, ebenfalls in sehr vereinfachter schematischer Darstellung, ein Beispiel des Reglers 10 in Form eines modellbasierten prädiktiven Reglers (Prädiktivregler). Der Regelstrecke 11, also der Kläranlage bzw. des darin ablaufenden Prozesses, ist ein Streckenmodell 12 zugeschaltet. Die der Regelstrecke 11 und dem Streckenmodell 12 als Stellgröße u zugeführte Drehzahl des Gebläses 6 (und ggf. weitere Stellgrößen), die mit der Sonde 7 erfasste Ammoniumkonzentration als Hauptregelgröße y (und ggf. weitere Messwerte wie Sauerstoffgehalt, Redoxpotential, pH-Wert, Temperatur) sowie die Differenz d^ zwischen den gemessenen Regelgrößen y und den von dem Modell 12 geschätzten Regelgrößen y^ werden einem ersten Prädiktor 13 zugeführt, der eine Vorhersage y0(k) für den künftigen Verlauf der Ammoniumkonzentration berechnet. Ein Führungsgrößen- oder Sollwertfilter 14 erhält den Schwellenwert 9, bei dessen Unterschreiten die Nitrifikations- bzw. Belüftungsphase beendet werden soll, und berechnet einen gewünschten zeitlichen Verlauf w(k) des Abfalls der Ammoniumkonzentration während der Nitrifikationsphase in Form einer asymptotischen Sollwert-Trajektorie (erster Ordnung) vom aktuellen Istwert y des Ammoniumgehalts zum geforderten Sollwert. Dabei wird der Ziel-Sollwert mit z. B. 0,4 mg/l knapp unter den Schwellenwert 9 gelegt, um sicherzustellen, dass der Schwellenwert 9 von 0,5 mg/l am Ende der Nitrifikationsphase nicht nur erreicht sondern unterschritten wird und die Umschaltung auf die Denitrifikationsphase erfolgt. Beispielsweise soll der Schwellenwert 9 von 0,5 mg/l in 100 Minuten erreicht werden. Ein zweiter Prädiktor 15 berechnet nun aus der Abweichung e0(k) zwischen dem Sollverlauf w(k) und dem vorhergesagten Verlauf y0(k) der Ammoniumkonzentration ohne Stelleingriff sowie der geplanten zukünftigen Stellgrößenänderungen Δu(k) einen Verlauf der zukünftigen Regelabweichungen e(k). Ein Optimierer 16 ermittelt aufgrund der zukünftigen Regelabweichungen e(k) und anhand von Optimierungs- und Nebenbedingungen 17 künftig erforderliche Verläufe der Stellgrößenänderungen Δu(k), von denen die jeweils aktuelle Stellgrößenänderung Δu einem Integrierer 18 zur Erzeugung der absoluten Stellgröße u zugeführt wird.

Um vorausschauend auf Schwankungen der Zulaufmenge des Abwassers reagieren zu können, ist eine Störgrößenaufschaltung der im Zulauf 2 gemessenen Zulaufmenge 19 vorgesehen. Dazu wird in einer Recheneinheit 20 die Wirkung von Schwankungen der Zulaufmenge 19 auf die Ammoniumkonzentration anhand von historischen Messdaten mit Hilfe von Verfahren zur Prozess-Identifikation abgeschätzt. Die Störgrößenaufschaltung lässt sich also ohne zusätzliche Bausteine direkt in dem Prädiktivregler 10 realisieren, indem die Einflüsse aus den Zulaufschwankungen zur Korrektur der vorhergesagten Zeitverläufe herangezogen werden. Funktionsblock 21 verdeutlicht die Störeinwirkung der Zulaufmenge 19 auf die Ammoniumkonzentration in dem Belebungsbecken 1.

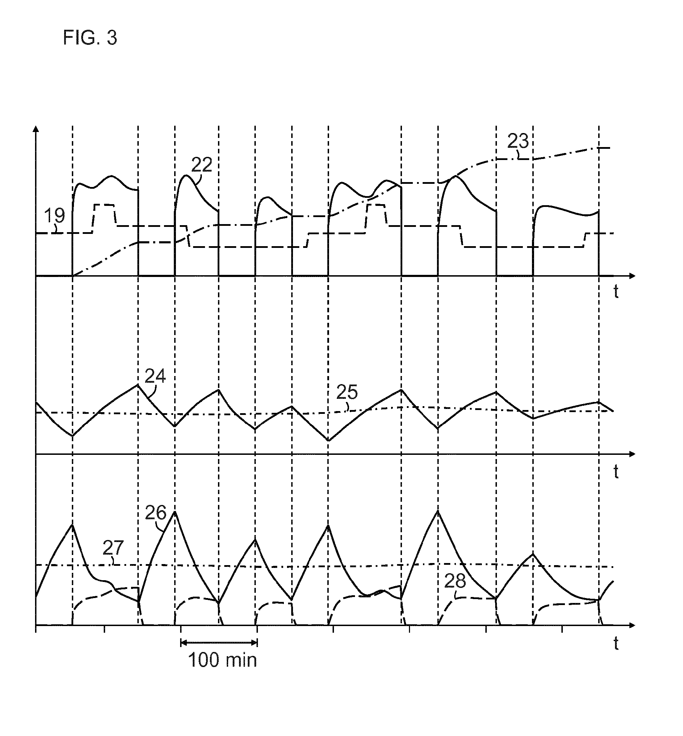

Figur 3 zeigt als Ergebnis einer Simulation von oben nach unten den Zulauf 21, die Gebläsedrehzahl 22, den elektrischen Energieverbrauch 23, den Nitratgehalt 24 im Belebungsbecken 1, den Nitratgehalt 25 im Ablauf des Nachklärbeckens 4, den Ammoniumgehalt 26 im Belebungsbecken 1, den Ammoniumgehalt 27 im Ablauf des Nachklärbeckens 4, und die Sauerstoffkonzentration 28 im Belebungsbecken 1 bei der erfindungsgemäßen Regelung der Leistung der Belüftung nach dem Ammoniumgehalt.

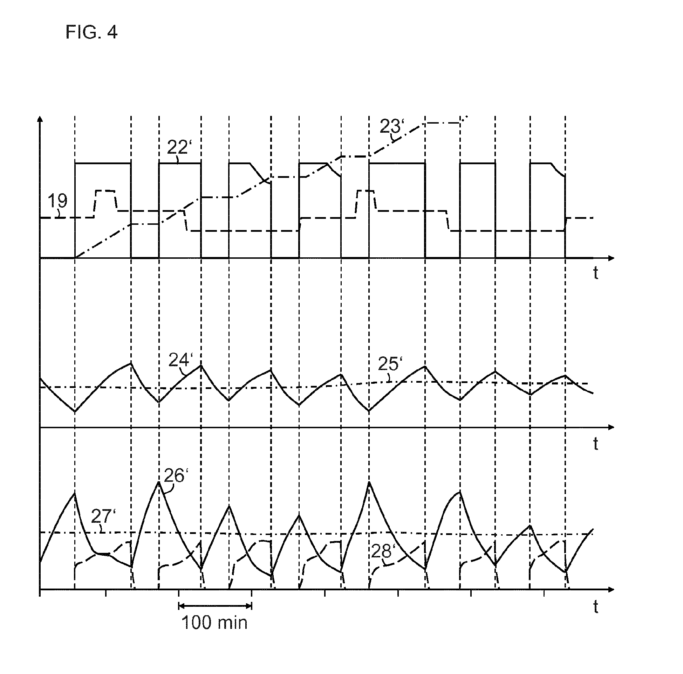

Zum Vergleich zeigt Figur 4 bei gleichem Zulauf 21, die Gebläsedrehzahl 22', den elektrischen Energieverbrauch 23', den Nitratgehalt 24' im Belebungsbecken 1, den Nitratgehalt 25' im Ablauf des Nachklärbeckens 4, den Ammoniumgehalt 26' im Belebungsbecken 1, den Ammoniumgehalt 27' im Ablauf des Nachklärbeckens 4, und die Sauerstoffkonzentration 28' im Belebungsbecken 1 bei bekannter Regelung der Leistung der Belüftung nach dem Sauerstoffgehalt.

Durch die erfindungsgemäße Regelung können im Vergleich zu der bekannten Regelung (in der Simulation) erhebliche Energieeinsparungen (10 bis 40%) erreicht werden, insbesondere in Zeiten mit geringen oder stark schwankenden Zulaufmengen. Dabei ist die Reinigungsleistung der Kläranlage unverändert, da die Ammonium- und Nitratkonzentration nach den Nachklärbecken in beiden Varianten gleich ist. Deutlich sichtbar ist auch die direkte Reaktion der erfindungsgemäßen Regelung auf Zulaufschwankungen.

Im Zulauf 2 (Figur 1) zum Belebungsbecken 1 können weitere Sensoren für Konzentrationsmessungen eingebaut werden. Die erhaltenen Konzentrationsmesswerte können als weitere Variable 29 für die Störgrößenaufschaltung verwendet werden. Dies ist insbesondere bei Abwasser-Kanalnetzen relevant, in denen lokale Schwankungen der Schmutzfrachteinleitung im Einzugsgebiet nicht durch Vermischung im Kanalnetz weitgehend nivelliert werden, bevor sie die Kläranlage erreichen.

## Patentansprüche

1. Regelungsvorrichtung für eine Kläranlage, in der in einem Belebungsbecken (1) Abwasser durch intermittierende Belüftung nitrifiziert und denitrifiziert wird, mit einem Regler (10), der dazu ausgebildet ist, während der Phase der Nitrifikation die Leistung der Belüftung in Abhängigkeit von einer gemessenen Prozessgröße (y) zu regeln, **dadurch gekennzeichnet, dass** dem Regler (10) der Ammoniumgehalt des Abwassers als die zu regelnde Prozessgröße (y) zugeführt wird.

2. Regelungsvorrichtung nach Anspruch 1, **dadurch gekennzeichnet, dass** der Regler (10) als modellprädiktiver Regler ausgebildet ist.

3. Regelungsvorrichtung nach Anspruch 1 oder 2, **dadurch gekennzeichnet, dass** der Regler (10) ein Sollwertfilter (14) enthält, das einen Sollwertverlauf (w(k)) für den Ammoniumgehalt des Abwassers berechnet, wobei der Sollwertverlauf (w(k)) zu einer vorgegebenen Zeit für das Ende der Phase der Nitrifikation einen vorgegebenen Schwellenwert (9) unterschreitet.

4. Regelungsvorrichtung nach einem der vorangehenden Ansprüche, **dadurch gekennzeichnet, dass** dem Regler (10) die Zulaufmenge (19) des Abwassers in das Belebungsbecken (1) als Störgröße aufgeschaltet ist.

5. Regelungsverfahren für eine Kläranlage, in der in einem Belebungsbecken (1) Abwasser durch intermittierende Belüftung nitrifiziert und denitrifiziert wird, wobei während der Phase der Nitrifikation die Leistung der Belüftung in Abhängigkeit von einer gemessenen Prozessgröße (y) geregelt wird, **dadurch gekennzeichnet, dass** der Ammoniumgehalt des Abwassers als die zu regelnde Prozessgröße (y) verwendet wird.

6. Regelungsverfahren nach Anspruch 5, **dadurch gekennzeichnet, dass** die Regelung als modellprädiktive Regelung ausgeführt wird.

7. Regelungsverfahren nach Anspruch 5 oder 6, **dadurch gekennzeichnet, dass** die Regelung entlang eines vorgegebenen Sollwertverlaufs (w(k)) für den Ammoniumgehalt des Abwassers erfolgt, wobei der Sollwertverlauf (w(k)) zu einer vorgegebenen Zeit für das Ende der Phase der Nitrifikation einen vorgegebenen Schwellenwert (9) unterschreitet.

8. Regelungsverfahren nach Anspruch 5, 6 oder 7, **dadurch gekennzeichnet, dass** der Regelung die Zulaufmenge (19) des Abwassers in das Belebungsbecken (1) als Störgröße aufgeschaltet wird.
